# EUROPEAN PATENT APPLICATION

(11) **EP 3 664 067 A1**
(43) Date of publication of application: **10.06.2020**
(21) Application number: 18842182.0
(22) Date of filing: 05.07.2018
(51) Int. Cl.: G09F 21/04

(54) **SYSTEM FOR THE PROVISION OF INFORMATION WHILE DRIVING**

(30) Priority: 01.08.2017 RU 2017127368
(71) Applicant: Shuda, Andrey Ivanovich, Moscow 108850 (RU)
(72) Inventor: Shuda, Andrey Ivanovich, Moscow 108850 (RU)
(74) Representative: Schlich, George
(86) International application number: PCT/RU2018/000446
(87) International publication number: WO 2019/027351

(57) **Abstract**

The invention relates to providing information to people by creating a dynamic image in a window of a vehicle, and to systems for transmitting, reproducing and storing images. The system comprises: a video monitor which creates two different images on two opposite sides of the body of said monitor; two video cameras; a microphone; an impact/acceleration sensor; an uninterruptible power source and a controller with a microcomputer, a satellite navigation system and a transceiver device, which links the system to a remote control device. In information-provision mode, a video sequence is displayed on the outside of the video monitor, said video sequence being designed for a specific district at a specific time of day. The second side, facing the driver, is used to create a "rear-view" image which the driver can observe through a standard rear-view mirror while the vehicle is in motion, while manoeuvring and when parked.

## Description

A system is designed for providing information to people by creating a dynamic image in a window of a vehicle, for example a passenger car, and relates to systems for reproducing and transmitting images.

Liquid crystal display monitors capable of creating a colour dynamic image on a flat or curved surfaces are known, see for example [1-2]. Devices of this type are overweight and are not reliable enough for use aboard a vehicle, for example a car.

The Samsung Safety Truck system [3] consisting of four large screens mounted on the rear doors of a truck is the closest to the claimed system for providing information. The screens are connected to cameras mounted at the height of the eyes of a driver of a passenger car and covering the space in front of the truck, which significantly increases the awareness and safety of drivers following the truck. Disadvantages of this system are a high cost of large-area screens and their high power consumption.

The purpose of the invention is to expand the functionality of the system for providing information while driving, in particular to display an arbitrary dynamic image of humanitarian and commercial purposes, visible in the daytime under conditions of external light interference. It is supposed to use a two-sided monitor having a bright screen adjacent to a window of a vehicle as the main components of the system.

The combination of the components used allows expanding the functionality, eliminating and significantly reducing the disadvantages of the prior art solution. In particular, an anti-reflective coating will significantly weaken the influence of external light sources on visibility and quality of an image of a video monitor outside a vehicle.

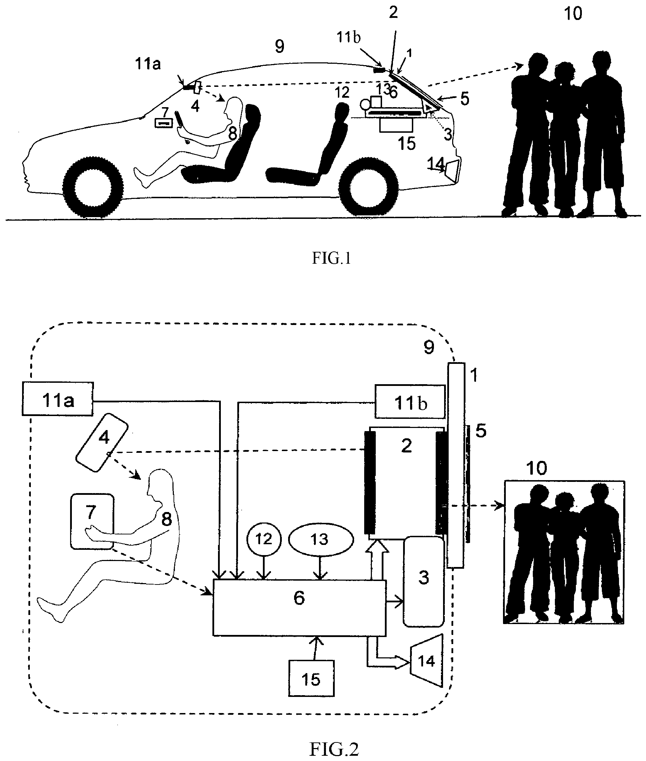

FIG. 1 shows the layout of the components of **the mobile system for providing information** inside a vehicle.
FIG.2 shows the block diagram of **the mobile system for providing information** .

The following reference numerals are used in the figures:
1: a window of a vehicle;
2: a video monitor capable of simultaneously creating two different images on two opposite sides of the body of said monitor;
3: a lifting device switching the monitor from an "off" horizontal position into an "operating" position, in which the monitor is adjacent to the window 1 of the vehicle.
4: a rear-view mirror inside the vehicle;
5: an anti-reflective coating applied to an outer side of the window 1;
6: a monitor controller with a transceiver device and a satellite navigation system;
7: a remote control device of the system;
8: a driver of the vehicle;
9: a vehicle body;
10: observers/spectators outside the vehicle;
11a: a forward-facing remotely controlled video camera having an optical zoom and a direction adjustment mechanism;
11b: a rearward-facing remotely controlled video camera having an optical zoom and a direction adjustment mechanism;
12: a microphone;
13: a tilt/displacement/acceleration/impact sensor;
14: an acoustic device comprising an audio frequency amplifier for mono and stereo sound accompaniment of a video sequence and generation of an alarm signal;
15: an uninterruptible power source.

The system is installed inside the vehicle body (9). In the operating condition, the video monitor (2) is placed opposite to the window (1) using the lifting device (3). The controller (6) comprises a microcomputer, a memory device and a transceiver device which allows linking the system to a mobile network and the remote control device (7), which allows controlling the system via Wi-Fi (IEEE 802.11 standard), Bluetooth (IEEE 802.15.1 standard) and via mobile networks over long distances.

The video cameras (11a), (11b), the microphone (12), the tilt/displacement/acceleration/impact sensor (13), the acoustic device (14) and the uninterruptible power source (15) are connected to the controller (6), which enable the system to function as a photo and video recorder and a security device capable of documenting current events, including acts of vandalism, and giving a sound and a radio alarm, including broadcasting a video if predefined thresholds of acoustic noise, vibration, tilt and/or impact are exceeded.

In the information-providing mode, the system operates as follows.

The controller (6), wirelessly, via a mobile network, Wi-Fi or Bluetooth, receives and generates a library consisting of video and photo materials, determines the current coordinates (geo-position) of the vehicle and switches the video monitor (2) into the operating position using the lifting device (3). Based on the data on the geographical position, the controller (6) selects and displays the video material designed for a specific district at a specific time of day on the monitor towards the window (1). At the same time, the controller (6) generates an activity log of the system, including the coordinates of the vehicle, the numbers of the displayed video material (content) with timestamps of the start, end and duration of the display. The activity log of the system can be requested remotely and transmitted wirelessly via a mobile network, Wi-Fi or Bluetooth.

The image facing the window (1) is displayed to external observers/spectators (10), potentially interested in obtaining information. The image facing inwards to the driver (8) shows the field of view of the video camera (11b) facing rearwards to create a "rear-view" image which the driver (8) can observe through the standard rear-view mirror (4) while the vehicle (9) is in motion, while manoeuvring and when parked. The image received from the video camera (11a) in motion can be displayed on the outside of the video monitor (2) to inform drivers following the vehicle (9).

The video sequence generated by the video cameras (11a) and (11b) can be recorded in the memory of the controller (6) capable of performing the function of a multichannel recorder capable of simultaneously recording video, current coordinates, sound and acceleration to document the situation on the road, including information about quality and condition of roads and streets.

In the security mode, the cameras (11a, 11b) operate in the motion detector mode, providing recording of a dynamic image. If a predefined threshold of the noise level detected by the microphone (12) and the shocks/vibrations/impacts detected by the sensor (13) is exceeded, a rapid response of the system follows in the form of a loud sound signal and an alarm radio signal received by the remote control device (7).

## Claims

1. Mobile system for providing information, comprising a video monitor, **characterized in that** said video monitor is provided with a master controller with a transceiver device, which links said system to a mobile network, and a satellite navigation system, which allows displaying a current video sequence according to the time and position of a vehicle; and a lifting mechanism, which allows placing said monitor closely to a window of said vehicle and removing said monitor from the field of vision of observers and a driver of said vehicle.

2. The video monitor according to claim 1, **characterized in that** it is provided with two matrices creating two images on two sides of the body of said video monitor.

3. The lifting device of the video monitor according to claim 1, **characterized in that** it is provided with electromechanical and pneumatic actuators, which allow lifting, rotating and placing said monitor closely to the window of the vehicle.

4. The vehicle window according to claim 1, **characterized in that** its outer side is provided with an anti-reflective coating, which allows improving the visibility of the image of the video monitor on the outside of the vehicle.
